# EUROPÄISCHE PATENTANMELDUNG

(11) **EP 0 726 426 A1**
(43) Veröffentlichungstag der Anmeldung: **14.08.1996**
(21) Anmeldenummer: 96100623.6
(22) Anmeldetag: 18.01.1996
(51) Int. Cl.: F24D 19/10, F25B 30/06, F24J 2/04

(54) **Verfahren zum optimalen Betrieb von Energiefassaden**

(30) Priorität: 13.02.1995 CH 410/95
(71) Anmelder: Hurdes, Vlastislav Josef, Dr.-Ing., 8246 Langwiesen (CH)
(72) Erfinder: Hurdes, Vlastislav Josef, Dr.-Ing., 8246 Langwiesen (CH)

(57) **Zusammenfassung**

Um Sonnen- und Umgebungsenergie an den Fassaden der zu beheizenden Gebäude optimal nutzen zu können, werden die als Niedetemperatur-Energiefassaden leichter Bauweise ausgebildete Fassaden an eine Wärmepumpenanlage (12) mit regulierberer Leistung und eine zusätzliche Wärmeerzeugungsanlage (13) gekoppelt. Durch die Regulierung der Wärmepumpenleistung (25) wird die Temperatur der Energiefassade (11) so optimiert, dass ein hoher Wirkungsgrad der Umwandlung der Sonnen- und Umgebungsenergie in Wärme gewährleistet wird, dass dabei der Taupunkt an der Fassadenoberfläche nicht unterschritten wird, dass die Wärmepumpe bei einer möglichst hohen Leistungsziffer arbeitet und dass dabei der Energieverbrauch der Wärmepumpen- und der zusätzlichen Wärmeerzeugungsanlage möglichst niedrig bleibt.

## Beschreibung

Die vorliegende Erfindung betrifft ein Verfahren zum optimalen Betrieb von Energiefassaden, welche Wärme aus der Sonnenenergie und/oder aus der Umgebungsenergie erzeugen und an eine Wärmepumpenanlage abgeben. Erzeugt wird die Wärme in den Fassaden bei Temperaturen, die von der jeweiligen Umbebundstemperatur nur wenig abweichen.

Energiefassaden, die als Wärmequelle für Wärmepumpenanlagen eingesetzt werden, sind zwar bekannt. Ihre Konstruktionen und ihr Betrieb sind jedoch nicht immer optimal. Oft sind die Energiefassaden nicht nur als Energieabsorber, sondern gleichzeitig als Energiespeicher mit einer relativ grossen thermischen Kapazität ausgebildet. Dies macht die gesamte Fassadenkonstruktion schwerfällig und teuer. Die Fassadentemperatur und damit der Wirkungsgrad der Sonnenenergienutzung, bzw. die Leistungsziffer der Wärmepumpe können dabei nicht effizient reguliert werden. Die Fassadenleistung als Sonnenenergieabsorber, bzw. die Leistungsziffer der Wärmepumpe sind dann zu niedrig. Auch arbeiten die bekannten Energiefassaden-Wärmepumpen Systeme nicht immer unter optimalen Bedingungen. Z.B. monovalente Wärmepumpenanlagen müssen den gesamten Wärmebedarf alleine abdecken. Die Energiefassade muss dabei jederzeit eine Wärmemenge abliefern, die dem jeweiligen Kaltwärmebedarf der Wärmepumpenanlage entspricht. Bei einem erhöhten Wärmebedarf, z.B. während den Wintermonaten und bei einer niedrigeren Intensität der Solarstrahlung, wird die Energiefassade die notwendige Wärmenlenge hauptsächlich aus der Umgebungsenergie beziehen, indem sie relativ stark unter die Temperatur der Aussenluft untergekühlt wird. Bei den relativ tiefen Temperaturen der Kaltwärme aus der Energiefassade sinkt die Leistungsziffer der Wärmepumpe stark ab, was die Wirtschaftlichkeit der Wärmeerzeugung verschlechtert. Ein weiteres Problem entsteht dadurch, dass die Fassade bei der starken Unterkühlung oft den Taupunkt unterschreitet. Dabei wird an der Fassadenoberfläche Kondensat, bei Temperaturen unter dem Gefrierpunkt Eis gebildet. Dies stellt eine optische Störung dar und verschlechtert den Wärmeübergang von der Umgebung an die Fassade sowie den Wirkungsgrad der Sonnenenergienutzung. Bei alternativ-bivalenten Wärmepumpenanlagen kann zwar eine niedrige Leistungsziffer und eine Eisbildung an der Fassadenoberfläche durch ein rechtzeitiges Umschalten an die bivalente Wärmeerzeugungsanlage vermieden werden. Dabei wird aber gleichzeitig auf die Sonnen- und Umgebungsenergienutzung verzichtet, was die Oekonomie der Wärmeerzeugung durch die Fassaden verschlechtert. Es sind zwar auch Energiefassaden bekannt, die an parallelbivalente Wärmepumpen mit veränderbarer Leistung gekoppelt sind.

Die Wärmepumpenleistung wird hier aber nicht zwecks Regulierung der Fassadentemperatur zur optimalen Sonnenenergie- und/oder Umgebungsenergienutzung verändert, sondern um dem jeweiligen Wärmebedarf evtl. unter Berücksichtigung der Leistungsziffer, angepasst zu werden.

Es ist die Aufgabe der vorliegenden Erfindung, die oben beschriebenen Probleme zu eliminieren, d.h. den Wirkungsgrad der Sonnenenergienutzung durch Energiefassaden zu maximieren, die Umgebungswärme optimal zu nutzen, die Leistungsziffer der an Energiefassaden angekoppelten Wärmepumpenanlagen zu erhöhen, die Probleme der Eisbildung zu eliminieren, die Konstruktion der Energiefassaden aus technischer, optischer und ökonomischer Sicht zu verbessern und die Wirtschaftlichkeit der Energieerzeugung durch das Gesamtsystem zu optimieren.

Eine möglichst hohe Leistungsziffer der Wärmepumpenanlage wird bekanntlich durch eine möglichst tiefe Temperatur der von der Wärmepumpe gelieferten Wärme und eine möglichst hohe Temperatur der Wärmequelle (d.h. der durch die Energiefassade gelieferten Kaltwärme) erreicht. Beides wird durch den parallel-bivalenten Betrieb einer Wärmepumpenanlage mit regulierbarer Leistung erzielt.

Durch die Verfügbarkeit einer zusätzlichen, der Wärmepumpe nachgeschalteten Wärmeerzeugungsanlage kann die Temperatur der Wärme nach der Wärmepumpe gesenkt und so die Leistungsziffer der Wärmepumpe angehoben werden. Die notwendige Endtemperatur wird durch die zusätzliche Wärmeerzeugungsanlage erzielt. Als zusätzliche Wärmeerzeugungsanlage kann eine konventionelle Kesselanlage für fossile Brennstoffe, eine Wärme-Kraft-Kopplungs-Anlage, die mit der Welle der Wärmepumpe fest verbunden ist, ein Blockheizkraftwerk, eine zusätzliche Wärmepumpenanlage oder eine andere Anlage dienen.

Durch die Verfügbarkeit der zusätzlichen Wärmeerzeugungsanlage, die ein Leistungsdefizit der Wärmepumpenanlage jederzeit abdecken kann, besteht weiter die Möglichkeit, die Temperatur der Energiefassade durch ein Variieren der Wärmepumpenleistung so zu regulieren, dass die Nutzung der Sonnen- und der Umgebungsenergie optimal verläuft und auch die Wärmepumpenanlage unter einer optimalen Leistungsziffer arbeitet. Zu diesem Zweck wird eine Wärmepumpenanlage eingesetzt, deren Leistung entweder stufenlos, z.B. durch Drehzahlveränderung des Kompressors, oder stufenweise, z.B. durch Zu- und Abschalten einzelner Kompressoren oder einzelner Wärmepumpenmodule, verändert werden kann.

Die Regelung der Fassadentemperatur durch das Variieren der Leistung der Wärmepumpenanlage wird erfindungsgemäss wie folgt bewerkstelligt:
Die an die Fassade anfallende direkte oder diffuse Solarstrahlung wird an der Fassadenoberfläche in Wärme umgewandelt. Dadurch steigt die Fassadentemperatur über die Temperatur der Umgebung an. Mit steigendem Temperaturunterschied zwischen der Fassadenoberfläche und der Umgebung steigen Wärmeverluste der Fassade durch Konvektion, d.h. durch den Wärmeaustausch zwischen der Fassade und der Umgebung. Bei einer Fassade ohne Energienutzung erreicht die Fassadenoberfläche eine Temperatur, bei welcher die Wärmeverluste mit dem Wärmegewinn aus der Solarstrahlung im Gleichgewicht stehen. Bei der Energiefassade wird aus der Fassade, mittels eines durch die Fassade strömenden Wärmeträgermediums, Wärme abgeführt. Die Temperatur der Fassade wird dadurch gesenkt. Damit sinkt auch der Temperaturunterschied zwischen der Fassadenoberfläche und der Umgebung und die Wärmeverluste der Fassade durch Konvektion. Je kleiner die Konvektionsverluste sind, desto höher ist die Fassadenleistung. Wird die Fassade soweit abgekühlt, dass der Temperaturunterschied gegenüber der Umgebung gleich Null oder negativ ist, verschwinden die Konvektionsverluste ganz. Beim Anstieg des Temperaturunterschiedes steigen wieder die Konvektionsverluste und sinkt die Fassadenleistung. Bei einer gegebenen Umgebungstemperatur herrscht somit ein direkter Zusammenhang zwischen der augenblicklichen Fassadentemperatur und der augenblicklichen Fassadenleistung. Wird die Fassadentemperatur verändert, wird gleichzeitig die Fassadenleistung als Sonnenenergieabsorber verändert. Dies gillt auch in umgekehrter Weise: wird die Fassadenleistung verändert, wird dadurch die Fassadentemperatur verändert.

Eine Veränderung der Fassadenleistung wird aber auch durch eine Veränderung der Wärmepumpenleistung, bzw. durch eine Leistungsveränderung des Wärmepumpen-Kompressors erreicht: Als Folge der veränderten Wärmepumpenleistung verändert sich die Leistung des Wärmepumpen-Verdampfers und mit ihm die Fassadenleistung.

Durch die Zusammenhänge zwischen der Wärmepumpenleistung, der Fassadenleistung und der Fassadentemperatur wird erfindungsgemäss die Fassadentemperatur direkt durch die Regulation der Wärmepumpenleistung optimiert.

Wird z.B. durch eine Erhöhung der Wärmepumpenleistung die Fassadenleistung angehoben, sinkt die Fassadentemperatur ab. Die Effizienz der Sonnenenergienutzung steigt dabei an. Mit der reduzierten Fassadentemperatur, d.h. mit der reduzierten Temperatur des durch die Fassade und durch den Wärmepumpen-Verdampfer strömenden Wärmeträgermediums, sinkt gleichzeitig die Leistungsziffer der Wärmepumpenanlage. Mit der reduzierten Fassadentemperatur und der erhöhten Wärmepumpenleistung sinkt gleichzeitig auch die Leistung der zusätzlichen Wärmeerzeugungsanlage und ihr Bedarf an Primärenergie.

Um den Bedarf des Gesamtsystems, d.h. der Wärmepumpenanlage und der zusätzlichen Wärmeerzeugungsanlage an Primärenergie zu minimieren, wird durch die Regulierung der Wärmepumpenleistung die Fassadentemperatur ständig optimiert.

Bei ungenügenden Strahlungsintensitäten, bzw. bei fehlender Solarstrahlung kann von der Energiefassade Wärme aus der Umgebungsenergie genutzt werden, indem die Temperatur der Energiefassade unter die Temperatur der Umgebung gesenkt wird. Durch Wärmekonvektion zwischen der Fassadenoberfläche und der Umgebungsluft fliesst dabei Wärme automatisch von der Umgebung in die Energiefassade. Die Fassadenleistung ist von der Höhe der Temperaturdifferenz zwischen der Fassade und der Umgebung abhängig. Umgekehrt ist die Höhe der Temperaturdifferenz zwischen der Fassade und der Umgebung von der - durch die Wärmepumpenanlage regulierbaren - Fassadenleistung abhängig. Bei gegebener Umgebungstemperatur ist also die Temperatur der Energiefassade direkt von der Wärmepumpenleistung abhängig. Dieser Zusammenhang wird, ähnlich wie bei der Sonnenenergienutzung, zur Optimierung der Fassadentemperatur durch die Wärmepumpenleistung verwendet. Z.B. bei einer relativ tiefen Umgebungstemperatur, einer fehlender Solarstrahlung und einem hohen Wärmebedarf würde die Fassadentemperatur allzu tief unter die Umgebungstemperatur absinken, sollte der gesamte Wärmebedarf durch die Wärmepumpenanlage alleine abgedeckt werden. Die Leistungsziffer der Wärmepumpe und ihre Wirtschaftlichkeit wären dabei allzu niedrig. Um die Leistungsziffer und die Wirtschaftlichkeit zu verbessern, wird die Temperatur der Energiefassade und mit ihr die Temperatur des Wärmeträgermediums durch eine Reduktion der Wärmepumpenleistung angehoben. Die fehlende Leistung wird dann durch die zusätzliche Wärmeerzeugungsanlage gedeckt. Die Optimierung der Fassadentemperatur durch eine Veränderung der Wärmepumpenleistung verläuft also immer identisch, gleich ob die Energiefassade nur Sonnenenergie, nur Umgebungsenergie oder beide Energiequellen gleichzeitig nutzt.

Das Problem der Eisbildung wird erfindungsgemäss ebenfalls durch die Regulation der Fassadentemperatur als Folge veränderter Wärmepumpenleistung gelöst. Die minimale Fassadentemperatur wird dabei durch eine Verminderung der Wärmepumpenleistung so begrenzt, dass sie den Taupunkt nicht unterschreitet. Z.B. bei einer relativen Feuchtigkeit der Aussenluft von r.F.=60% darf die Unterkühlung höchstens ca. 6K, bei r.F.=80% ca. 2.5K und bei r.F.=100% 0.0K betragen. Während klaren Nächten sinkt die Fassadentemperatur infolge langwelliger Abstrahlung gegen den Himmel auch ohne Energienutzung unter die Umgebungstemperatur ab, sodass der Taupunkt an der Fassadenoberfläche bereits bei einer relativen Aussenluftfeuchtigkeit unterhalb von 100% erreicht wird. Die Grösse der Fassadenunterkühlung zwecks Umgebungswärmenutzung wird dadurch weiter begrenzt. In der Regel wird während den trockeneren Sommermonaten eine grössere Unterkühlung, d.h. eine grössere Leistung der Fassade als Umgebungswärmeabsorber ermöglicht, als während den Wintermonaten, wenn die relative Feuchtigkeit der Aussenluft hoch ist.

Eine möglichst hohe Leistung der Energiefassade als Absorber der Umgebungsenergie auch während Perioden mit erhöhter Aussenluftfeuchtigkeit und begrenzter Möglichkeit zur Fassadenunterkühlung wird erfindungsgemäss dadurch erreicht, indem die Fassadenoberfläche durch Rippen oder eine andere Strukturierung vergrössert wird. Eine markante Leistungssteigerung solcher gerippten oder anders strukturierten Energiefassaden wird insbesondere bei erhöhten Wingeschwindigkeiten erreicht.

Als Energiefassade, deren Temperatur effizient reguliert werden soll, wird vorzugsweise eine vorgehängte, hinterlüftete Fassade leichter Bauweise eingesetzt. In die einzelnen Fassadenelemente sind, ähnlich wie bei den Absorbern konventioneller Sonnenkollektoren, Kanäle oder Rohrleitungen integriert, in welchen ein Wärmeträgermedium strömt und effizient Wärme aus dem Fassadenelement abführt. Das Material der Fassadenelemente ist von einer möglichst guter Wärmeleitfähigkeit und geringer Wärmekapazität, damit ihre Temperatur auf die Temperaturveränderungen des durch die Fassade strömenden Wärmeträgermediums schnell reagieren kann. Zu diesem Zweck werden die Energiefassaden aus möglichst dünnen, in der Regel weniger als 3 mm starken Elementen zusammengesetzt. Die Fassadenelemente werden vorzugsweise aus Metallen wie z.B. Aluminium, Kupfer, Stahl, Edelstahl, oder aber auch aus geeigneten Kunststoffen hergestellt. Als Folge der niedrigen Wärmekapazität, der guten Wärmeleitfähigkeit und des guten Wärmeüberganges zwischen dem Fassadenelement und dem Wärmeträgermedium sind die Temperaturen des Wärmeträgermediums und des entsprechenden Fassadenelementes jederzeit annähernd identisch.

Der Hinterlüftungsraum der vorgehängten Fassade wird erfindungsgemäss so gestaltet, dass genügend Raum für die Führung von Sammelleitungen sowie für Verbindungsleitungen zwischen einzelnen Fassadenelementen und zu den Sammelleitungen vorhanden ist. Fassadenelemente, die die Verbindungs- und die Sammelleitungen verdecken, sind demontierbar, um periodische Kontrollen und Reparaturen des Rohrleitungssystems zu ermöglichen.

Die mit dem Wärmeträgermedium durchströmten Energiefassaden können direkt als Verdampfer der Wärmepumpe eingesetzt werden. Die in der Fassade gewonnene Wärme kann aber auch vorerst mittels einer Flüssigkeit, z.B. mittels eines frostsicheren Wasser/Glykol Gemisches, aus der Fassade abgeführt und anschliessend an einen oder mehrere Wärmepumpenverdampfer abgegeben werden. Der Temperaturunterschied des Wärmeträgermediums vor und nach der Energiefassade wird dabei durch das Variieren seiner Durchflussgeschwindigkeit reguliert. Dadurch kann z.B. die Gefahr der Eisbildung reduziert werden, wenn die Energiefassade als Umgebungswärmeabsorber in der Nähe des Taupunktes arbeitet, indem die Temperaturdifferenz des Wärmeträgermediums vor und nach der Fassade verkleinert, d.h. seine Eintrittstemperatur in die Fassade, bzw. die unterste Fassadentemperatur angehoben wird. Die Regulation des Temperaturunterschiedes des Wärmeträgermediums vor und nach der Fassade wird erfindungsgemäss durch das Variieren seiner Durchflussgeschwindigkeit mittels einer Umwälzpumpenanlage und/oder mittels eines By-pass Ventils bewerkstelligt.

Die Fassadenoberfläche muss mit keinen besonderen "selektiven" Beschichtungen versehen werden, da bei den relativ tiefen Arbeitstemperaturen praktisch keine langwellige Wärmeabstrahlung entsteht. Die meisten dunkleren Farben haben ein ausreichend grosses Absorptionsvermögen der direkten und diffusen Solarstrahlung. Die Energiefassaden können deshalb farbig gestaltet und mit den üblichen, dauerhaften Fassadenbeschichtungen, wie z.B. Pulverbeschichtung, Emaillierung o.ä., versehen werden. Da der Wärmetransport unsichtbar im Hinterlüftungsraum stattfindet und die Fassaden farbig sind, wird durch die Energiefassaden Wärme erzeugt und transportiert, ohne dass dies ausserhalb des Gebäudes gemerkt wird.

Bedingt durch den Verzicht auf die bei konventionellen Solaranlagen sonst übliche Verglasung, Isolierung, Abdichtung und Einrahmung des Energieabsorbers, durch die Einfachheit und hohe Lebensdauer der Fassadenelemente, sowie durch die zahlreichen Synergieeffekte mit dem fassadenbau, sind die Kosten der in den "Energiefassaden leichter Bauweise" erzeugten Wärme fast vernachlässigbar.

Der Einsatz einer bivalenten, zusätzlichen Wärmeerzeugungsanlage hat weiter den Vorteil, dass zum Antrieb des Wärmepumpen-Kompressors eine Wärme-Kraft-Kopplungsanlage oder ein Blockheizkraftwerk eingsetzt werden kann. Dadurch kann auf den Bezug vom Strom aus dem öffentlichen Netz verzichtet werden, was hauptsächlich bei grösseren Anlagen von Vorteil ist. Beim Einsatz eines Blockheizkraftwerkes kann gar Strom zusätzlich erzeugt werden, sodass solche Anlagen nicht nur mit einem sehr bescheidenen Brennstoffverbrauch auskommen, sondern den Gebäudebesitzer auch unabhängiger machen und die allgemeine Elektrizitätswirtschaft entlasten.

Im folgenden werden die Einzelheiten des Erfindungsgegenstandes an Hand von Zeichnungen näher erläutert:

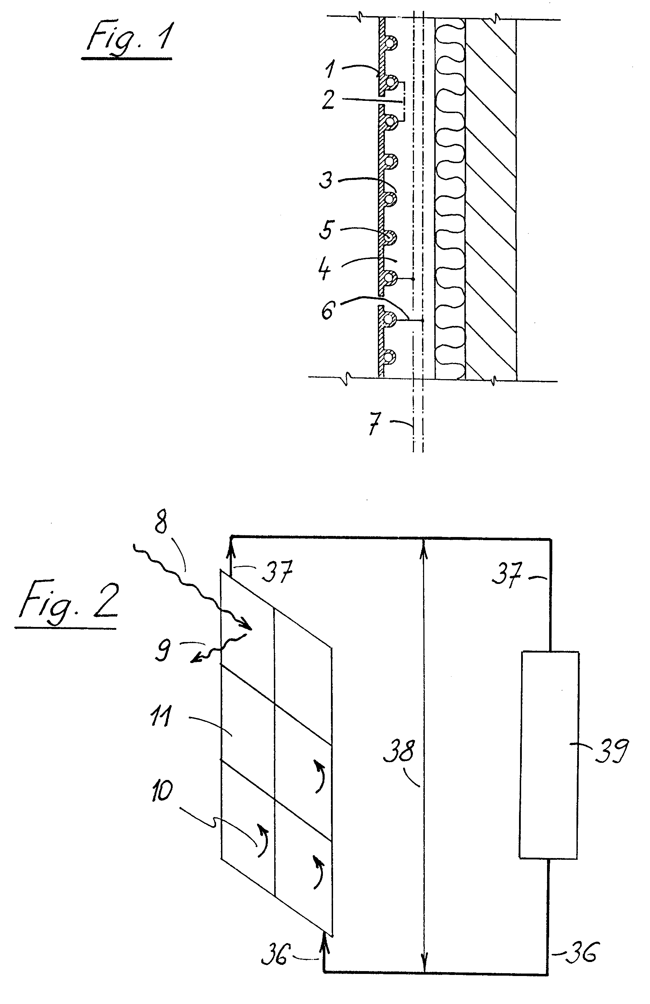

Fig.1 zeigt schematisch einen Schnitt durch eine vorgehängte, hinterlüftete Energiefassade leichter Bauweise. In die einzelnen Fassadenelemente 1 sind, vorzugsweise auf ihrer Rückseite, Kanäle oder Rohrleitungen 3 integriert, in welchen ein Wärmeträgermedium 5 strömt, welches Wärme von den Fassadenelementen 1 abführt. Die Verbindungsleitungen zwischen einzelnen Fassadenelementen 2 und zu den Sammelleitungen 6, sowie die Sammelleitungen 7 zu und von der Wärmepumpenanlage sind vorzugsweise im Hinterlüftungsraum 4 der vorgehängten Fassade positioniert.
Fig.2 zeigt den Energiehaushalt der Energiefassade. Die direkte oder diffuse Solarstrahlung 8 wird an der Fassadenoberfläche zum Teil abreflektiert. Werden die Reflexionsverluste 9 durch die Verwendung dunkler Farben tief (z.B. unterhalb von 20%) gehalten, wird ein sehr hoher Anteil (über 80%) der Sonnenenergie in Wärme umgewandelt. Die Effizienz einer solchen als Sonnenenergieabsorber eingesetzten Energiefassade ist hoch. Bei einer Temperatur der Fassadenoberfläche, die höher ist als die Umgebungstemperatur, geht ein Teil der in Wärme umgewandelten Sonnenenergie durch Konvektion 10, d.h. durch den Wärmeaustausch zwischen der Fassadenoberfläche und der Umgebungsluft, verloren. Bei gegebener Fassadenoberfläche und bei den momentan herrschenden Windgeschwindigkeiten ist die Höhe der Konvektionsverluste annähernd durch die Differenz zwischen der Fassadentemperatur und der Umgebungstemperatur bestimmt. Bei einer Fassade, deren Temperatur gleich hoch oder tiefer ist als die Umgebungstemperatur, entstehen keine Konvektionsverluste, die hohe Effizienz der Sonnenenergienutzung bleibt erhalten. Durch eine Regulation der Fassadentemperatur kann somit die Effizienz der Energiefassade als Sonnenenergieabsorber und damit die Fassadenleistung geregelt werden.
   Bei gegebener Fassadenoberfläche und bei gegebenen Werten für Strahlungsintensität, Konvektionsverluste und Umgebungstemperatur gilt annähernd, dass die augenblickliche Fassadenleistung allein von der augenblicklichen Fassadentemperatur abhängig ist. Dieser Zusammenhang gilt auch umgekehrt: unter den gegebenen Bedingungen ist die Fassadentemperatur von der Fassadenleistung abhängig.
   Bei gegebenem Durchfluss des Wärmeträgermediums ist die Fassadenleistung gleichzeitig durch die Temperaturdifferenz 38 des Wärmeträgermediums zwischen Fassadenaustritt 37 und Fassadeneintritt 36 bestimmt. Diese Temperaturdifferenz 38 ist durch die momentane Leistung der Wärmepumpenanlage erzwungen. Bei den gegebenen Bedingungen kann somit die Fassadentemperatur erfindungsgemäss durch die Leistung der Wärmepumpenanlage geregelt werden, wodurch die Effizienz der Sonnenenergienutzung optimiert werden kann.
   Da bei gegebenem Durchfluss des Wärmeträgermediums mit der Veränderung der Fassadentemperatur auch die Temperatur des Wärmeträgermediums am Fassadenaustritt 37, bzw. am Eintritt in den Wärmepumpen-Verdampfer 39 verändert wird, wird durch die Veränderung der Wärmepumpenleistung gleichzeitig die Leistungsziffer der Wärmepumpe verändert. Die Effizienz der Sonnenenergienutzung, bzw. die Regulation der Fassadentemperatur wird deshalb unter gleichzeitiger Berücksichtigung der veränderten Leistungsziffer der Wärmepumpe optimiert.
   Bei Temperaturen der Fassadenoberfläche unterhalb der Umgebungstemperatur werden aus den Konvektionsverlusten 10 Konvektionsgewinne 10. Die Höhe der Wärmegewinne durch Konvektion, d.h. die Fassadenleistung als Umgebungswärmeabsorber, ist bei gegebener Fassadenoberfläche und bei der momentan herrschender Umgebungstemperatur und Windgeschwindigkeit von der Fassadentemperatur abhängig und umgekehrt: die Fassadentemperatur ist von der Fassadenleistung abhängig. Die Fassadentemperatur kann somit, ähnlich wie bei der Sonnenenergienutzung, auch bei der Umgebungswärmenutzung durch die Veränderung der Wärmepumpenleistung geregelt werden. Die Regelung der Fassadentemperatur bei gleichzeitiger Nutzung der Sonnenenergie und Umgebungsenergie verläuft in ähnlicher Weise.

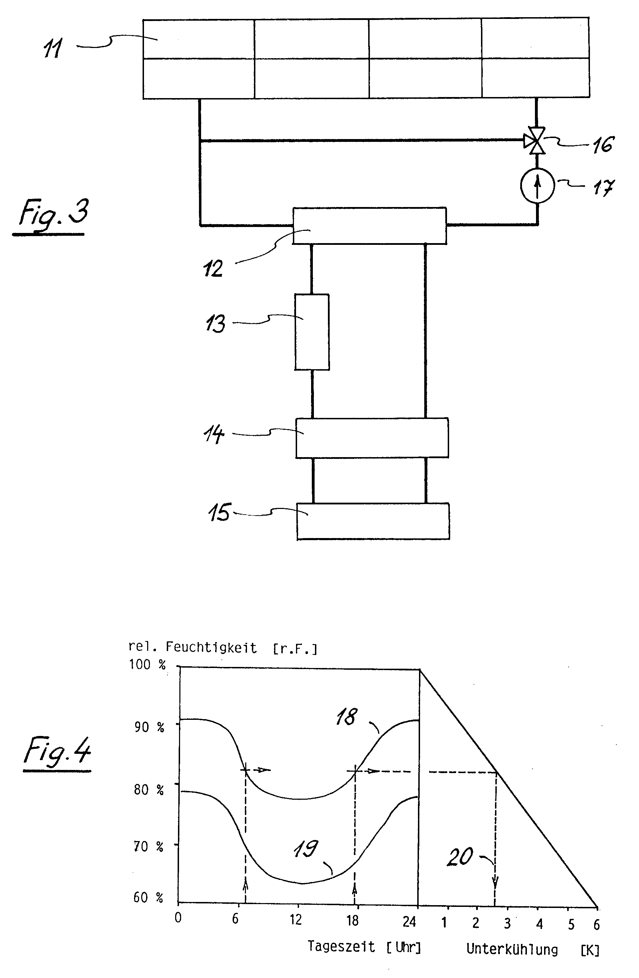

Fig.3 zeigt schematisch ein vereinfachtes hydraulisches Diagramm des Systemes Energiefassade 11 / Wärmepumpenanlage 12 plus zusätzliche, der Wärmepumpe nachgeschaltete Wärmeerzeugungsanlage 13. Die durch dieses System erzeugte Wärme wird vorerst in einem technischen Speicher 14 zwischengespeichert, bevor sie an ein Heizungs- und/oder Warmwassersystem 15 abgegeben wird. Durch den technischen Speicher 14 wird erreicht, dass die Leistungen der Fassade 11, der Wärmepumpenanlage 12 und der zusätzlichen Wärmeerzeugungsanlage 13 nicht nur kontinuierlich, sondern, wenn gewünscht, auch über grössere Zeitspannen verändert werden können. Dadurch wird ihr Bertieb ausgeglichener und ihre Lebensdauer erhöht. Die Leistungen der Anlagen oder des Gesamtsystemes werden dann als Stundenleistungen, Tagesleistungen o.ä. verstanden. Die Strömungsgeschwindigkeit des Wärmeträgermediums durch die Wärmepumpenanlage 12, bzw. durch die Fassade 11 wird durch die Umwälzpumpenanlage 17 und/oder durch das By-pass Ventil 16 geregelt.
Fig. 4 zeigt schematisch einen typischen Verlauf der relativen Aussenluftfeuchtigkeit r.F. über 24 Std. während den Wintermonaten in einem trockenen 19 und in einem nebligen 18 Gebiet, sowie die entsprechende maximal mögliche Fassadenunterkühlung 20, bei welcher der Taupunkt an der Fassadenoberfläche noch nicht unterschritten wird. In trockenen Gebieten ist sowohl tagsüber wie auch während der Nacht eine relativ grosse Unterkühlung und eine entsprechend grosse Leistung der Fassade als Umgebungswärmeabsorber möglich. Eine maximal mögliche Unterkühlung wird da selten benötigt. In einem Nebelgebiet dagegen ist die Unterkühlung während den Wintermonaten tagsüber auf z.B. ca. 2-3 K, nachts aufweniger als 1 K begrenzt. Die Fassade wird sich da oft in der Nähe des Taupunktes befinden.

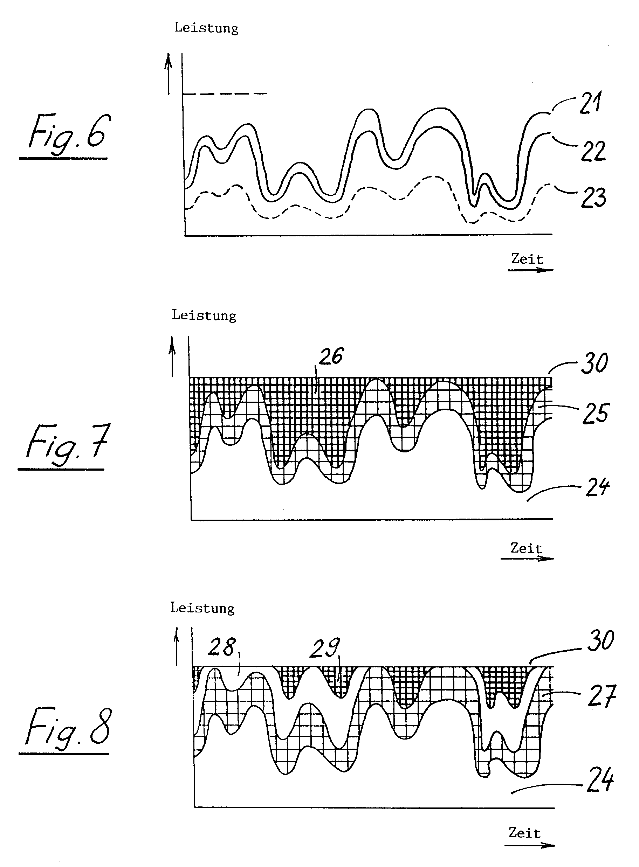

Fig.5 zeigt den Schnitt durch einige gerippte Fassadenelemente, mit welchen die Fassadenleistung als Umgebungswärmeabsorber vergrössert wird, sodass sie auch bei einer relativ geringen Unterkühlung brauchbare Werte erreicht. Die Struktur der Fassadenoberfläche, die vom Architekten mitbestimmt wird, kann verschiedenartige Formen 40, 41, 42 u.a. annehmen.
Fig.6 zeigt schematisch, über eine gewisse Zeitspanne, z.B. über mehrere Stunden, einen möglichen Verlauf der Strahlungsintensitäten 21 und die entsprechenden Fassadenleistungen 22 in einem idealen Zustand, bei unterdrückten Konvektionsverlusten. Der Verlauf der Fassadenleistungen 22 nähert sich dabei dem Verlauf der Strahlungsintensitäten 21. Bei einer Fassade, deren mittlere Temperatur über der Umgebungstemperatur liegt, entstehen zusätzliche Wärmeverluste durch Konvektion. Dies reduziert die effektiven Fassadenleistungen auf den Wert 23. Die Leistungsreduktion kam bereits bei einer relativ geringen Temperaturanhebung erheblich sein, insbesondere wenn die Windgeschwindigkeiten hoch sind. Deshalb ist es wichtig, die Fassadentemperatur ständig zu optimieren.
Fig.7 zeigt schematisch den Verlauf der Leistungen einer Wärmepumpenanlage (der Kompressorleistungen) 25 und einer Energiefassade 24, die im Idealzustand nur die Sonnenenergie nutzt. Die maximale gemeinsame Leistung der Wärmepumpenanlage (die Kompressorenleistung) und der Energiefassade ist für einen Wert 30 ausgelegt. Wird dieser Wert bei niedrigeren Strahlungsintensitäten nicht erreicht, wird das Defizit 26 durch die zusätzliche Wärmeerzeugungsanlage gedeckt.
In der Fig.8 sind die Leistungen der Wärmepumpenanlage (die Kompressorenleistung) 27 und der Energiefassade erhöht, indem durch eine Unterkühlung der Fassade unter die Umgebungstemperatur neben Sonnenenergie 24 auch Umgebungswärme 28 genutzt wird. Die Höhe der Unterkühlung, d.h. die Fassadenleistung als Umgebungswärmeabsorber wird dabei so reguliert, dass die Leistungsziffer der Wärmepumpenanlage möglichst hoch bleibt und dass die unterste Fassadentemperatur den Taupunkt nicht unterschreitet. Das durch die zusätzliche Wärmeerzeugungsanlage zu deckende Defizit 29 ist nun bedeutend kleiner, als das Defizit 26 bei der reinen Sonnenenergienutzung, womit der Primärenergieverbrauch der zusätzlichen Wärmeerzeugungsanlage bedeutend reduziert wird.

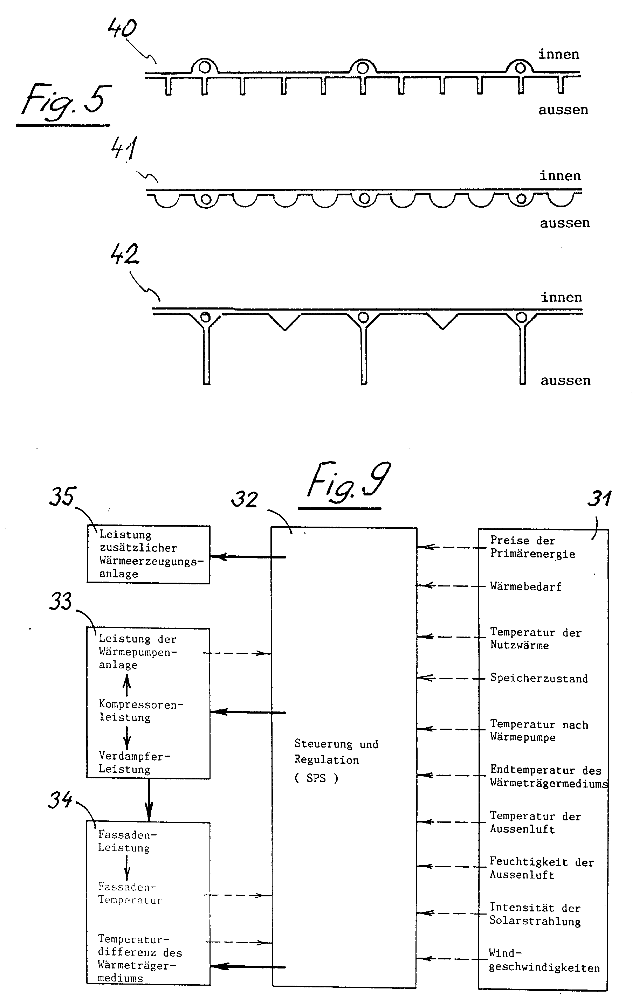

In Fig.9 werden schematisch und vereinfachend einige Hauptparameter dargestellt, mit welchen die Temperatur der Energiefassade reguliert und der Betrieb einzelner Anlagen und des Gesamtsystemes optimiert wird. Die Regulation 32 empfängt und verarbeitet laufend verschiedene Informationen 31 über Randbedingungen, Betriebszustände, klimatische Verhältnisse u.a. und erteilt Signale zur Leistungsveränderung der Wärmepumpenanlage 33 und der zusätzlichen Wärmeerzeugungsanlage 35, zur Durchflussänderung des Wärmeträgermediums durch die Fassade 34 u.a. Als Regulation wird vorzugsweise eine Speicher-Programmierbare-Steuerung eingesetzt, mit welcher der Programm und die Daten auch nach der Inbetriebsetzung optimiert werden können.

## Patentansprüche

1. Verfahren zur Erzeugung von Heiz- und/oder Warmwasserwärme, mittels einer Energiefassade zur Umwandlung der Sonnenenergie und/oder der Umgebungsenergie in Wärme, mit einer Wärmepumpenanlage deren Leistung stufenlos oder stufenweise veränderbar ist, mit einer zusätzlichen Wärmeerzeugungsanlage und mit einer Regelung, **dadurch gekennzeichnet,** dass die Temperatur der Energiefassade durch Leistungsänderungen der Wärmepumpenanlage reguliert wird.

2. Verfahren nach Anspruch 1, **dadurch gekennzeichnet,** dass die Temperatur der Energiefassade so reguliert wird, dass sie den Taupunkt nicht unterschreitet.

3. Verfahren nach Anspruch 1, **dadurch gekennzeichnet,** dass die Temperaturdifferenz des Wärmeträgermediums zwischen dem Ein- und Austritt aus der Energiefassade durch das Variieren seiner Strömungsgeschwindigkeit mittels einer Umwälzpumpenanordnung und/oder mittels eines By-pass Ventils reguliert wird.

4. Verfahren nach Anspruch 1, **dadurch gekennzeichnet,** dass die Oberfläche der Fassade durch Rippen und/oder eine andere Strukturierung vergrössert wird.

5. Verfahren nach Anspruch 1, **dadurch gekennzeichnet,** dass die Energiefassade als eine vorgehängte, hinterlüftete Fassade leichter Bauweise ausgebildet wird.

6. Verfahren nach Anspruch 5, **dadurch gekennzeichnet,** dass Sammelleitungen sowie Verbindungsleitungen zwischen den Fassadenelementen und zu den Sammelleitungen im Hinterlüftungsraum der vorgehängten Fassade positioniert sind.

7. Verfahren nach Anspruch 1, **dadurch gekennzeichnet,** dass die durch die Wärmepumpenanlage und/oder die zusätzliche Wärmeerzeugungsanlage erzeugte Wärme in einem Wärmespeicher zwischengespeichert wird, bevor sie an das Heiz- und/oder das Warmwassersystem abgegeben wird.
